# EUROPEAN PATENT SPECIFICATION

(11) **EP 1 488 387 B1**
(45) Date of publication and mention of the grant of the patent: **02.08.2006**
(21) Application number: 03743323.2
(22) Date of filing: 21.02.2003
(51) Int. Cl.: G07F 7/10, H04L 29/06, H04L 9/00

(54) **METHOD AND SYSTEM FOR PERFORMING POST ISSUANCE CONFIGURATION AND DATA CHANGES TO A PERSONAL SECURITY DEVICE USING A COMMUNICATIONS PIPE.**
VERFAHREN UND SYSTEM ZUR DURCHFÜHRUNG VON POST-AUSGABE-KONFIGURATIONS UND DATENÄNDERUNGEN AN EINEM PERSÖNLICHEN SICHERHEITSGERÄT UNTER VERWENDUNG EINER KOMMUNIKATIONS-PIPELINE
PROCEDE ET SYSTEME PERMETTANT D'EFFECTUER DES CHANGEMENTS DE CONFIGURATION ET DE DONNEES POST-EMISSION DANS UN DISPOSITIF DE SECURITE PERSONNELLE UTILISANT UN CANAL DE COMMUNICATION

(30) Priority: 01.03.2002 US 85127
(43) Date of publication of application: 22.12.2004
(73) Proprietor: ACTIVCARD IRELAND LIMITED, Dublin 2 (IE)
(72) Inventor: AUDEBERT, Yves, LOS GATOS, CA 95032 (US); LE SAINT, Eric Fernand, CUPERTINO, CA 95014 (US)
(74) Representative: Colas, Jean-Pierre
(86) International application number: PCT/EP2003/001830
(87) International publication number: WO 2003/075232

(56) References cited:
- WO-A-01/16900
- DE-A- 19 724 901
- FR-A- 2 779 018
- US-A- 5 778 071
- US-A- 6 108 789

## Description

### FIELD OF INVENTION

The present invention relates to a data processing method and system for performing post issuance configuration and data changes through a communications path (the "pipe") established over a communications network between a Personal Security Device (PSD) and a hardware security module (HSM) associated with a server in a way that does not disclose the security mechanisms implemented in the PSD to a local client computer or server.

### BACKGROUND OF INVENTION

The current art involving the use of personal security devices (PSD), for example, smart cards, subscriber identity module (SIMs), wireless identify modules (WIMs), biometric devices, tokens or combinations thereof, requires specialized messaging software or firmware to be installed on a local client in which the PSD is connected. These specialized programs are used to translate from higher level messaging protocols into the low-level messaging packets known in the art as Application Protocol Data Units (APDU) in order to communicate with a PSD.

Placement of the specialized messaging software hereinafter referred to as an APDU interface on local clients, significantly increases the potential for compromising the security of the system since a limitation of the current art requires local generation of cryptographic keys on the local client in order to obtain access to the proprietary information contained inside the PSDs. Local generation of the cryptographic keys and client transactions involving proprietary data are susceptible to interception by covertly installed programs designed to capture the sensitive transactions.

To address some of the limitations in the current art, US patent application, published October 31, 2002 under No. 2002/0162021 entitled, *"METHOD AND SYSTEM FOR ESTABLISHING A REMOTE CONNECTION TO A PERSONAL SECURITY DEVICE",* provides a system and method for establishing a communications pipe over a network between a server and a personal security device. A client associated with the PSD provides the communications and power interface for the PSD but is not involved in performing transactions with the PSD. The generation or retrieval of cryptographic keys necessary to access a secure domain contained inside a target PSD is performed by a hardware security module (HSM) associated with a remote server, thus maintaining end-to-end security.

US patent application published October 31, 2002 under No. 2002/0162023 entitled *"METHOD AND SYSTEM FOR AUTHENTICATION THROUGH A COMMUNICATIONS PIPE,"* provides a system and method for utilizing the communications pipe described in US patent application published October 31, 2002 under No. 2002/0162021 entitled, *"METHOD AND SYSTEM FOR ESTABLISHING A REMOTE CONNECTION TO A PERSONAL SECURITY DEVICE",* to securely transfer credentials from the PSD to a server, thus allowing the remote server to act as a proxy for authentication and other proprietary transactions normally performed by the local client and PSD.

Both co-pending patent applications provide several advantages over the prior art in their ability to maintain end-to-end secure communications over a public network such as the Internet. Most importantly, transactions are only performed in highly secure and protected domains of a PSD and HSM, which greatly reduce the chances of unauthorized access or interception. Neither co-pending patent application is admitted by the inventor to be prior art.

Patent application WO 01/16900 is another document describing a system for performing data changes within a PSD.

### BRIEF SUMMARY OF INVENTION

According to the present invention there is provided a post issuance system for performing data or configuration changes within a PSD according to claim 1.

According to the present invention there is also provided a post issuance method for performing data or configuration changes within a PSD according to claim 19.

This invention provides a mechanism for performing secure configuration and data changes between a PSD and a hardware security module (HSM) using the communications pipe described in US patent application published October 31, 2002 under No. 2002/0162021 entitled, *"METHOD AND SYSTEM FOR ESTABLISHING A REMOTE CONNECTION TO A PERSONAL SECURITY DEVICE." The* data changes and configuration changes include but are not limited to installing, updating, replacing, deleting digital certificates, cryptographic keys, applets, other digital credentials, attributes of installed objects, or other stored proprietary information.

A communications pipe is established between an HSM and a PSD preferably using a secure messaging protocol such as TCP/IP implementing transport layer security including secure socket layer (SSL) encryption or IPSEC. Once the communications pipe is established, mutual authentications are performed through the pipe using established authentication protocols, typically challenge and response mechanisms.

Cryptographic keys necessary to perform the configuration or data changes are generated within the secure domain of the HSM. This is usually performed by cross referencing the embedded PSD's serial number or other unique identifier associated with the PSD and retrieving or regenerating the proper cryptographic key(s). The cryptographic key(s) may be any combination of symmetric or asymmetric key(s). For simplicity, the term cryptographic key will be used hereinafter to identify the combination of symmetric or asymmetric key(s). The HSM version of the cryptographic key is then used to encrypt command strings required to perform the configuration or data changes.

The PSD's secure domain containing the configuration or data to be changed is selected using an application identifier (AID) code. The AID identifies a specific application associated with the objects to be manipulated. An APDU command containing the selected AID is sent through the communications pipe, which directs the PSD's internal operating system to direct incoming APDU's to the selected application.

Once the target AID is successfully selected, encrypted command strings are encapsulated inside APDUs and sent through the communications pipe to the AID controlling the secure domain. The selected application decrypts and executes the incoming command strings using a complementary cryptographic key contained within its associated secure domain. The desired configuration or data change to be accomplished is included in the incoming APDU's encrypted command string. Following completion of the configuration or data change a response APDU is returned through the communications pipe to the issuing server signaling the end of the post issuance configuration or change process.

A more detailed explanation of the specific APDU communications protocol, commands and PSD internal file structures is provided in international standard ISO 7816-4, *"INFORMATION TECHNOLOGY, IDENTIFICATION CARDS INTEGRATED CIRCUIT(S) CARDS WITH CONTACTS,"* Part 4.

### BRIEF DESCRIPTION OF DRAWINGS

A more complete understanding of the present invention may be accomplished by referring to the following Detailed Description and Claims, when viewed in conjunction with the following drawings:
FIG. 1 - is a generalized system block diagram for implementing present invention;
FIG. 2 - is a detailed block diagram depicting the transfer of the proper cryptographic information necessary to access the secure domain containing the target credential;
FIG. 3 - is a detailed block diagram depicting the transfer of a credential from a second server over a network for injection into a target PSD.
FIG. 4 - is a detailed block diagram depicting accessing the secure domain containing the target credential and the interrelationship of the PSD's security executive.

### DETAILED DESCRIPTION OF PREFERRED EMBODIMENT

This invention provides a method and system for performing post issuance configuration and data changes through a communications path (the "pipe") established over a communications network between a Personal Security Device (PSD) and a hardware security module (HSM) associated with a server in a way that does not disclose the security mechanisms implemented in the PSD to a local client computer or server. Details related to the communications pipe are described in US patent application published October 31, 2002 under No. 2002/0162021 entitled, *"METHOD AND SYSTEM FOR ESTABLISHING A REMOTE CONNECTION TO A PERSONAL SECURITY DEVICE".* For clarity, specific mention of the pipe server and pipe client API level programs are not specifically included in this application but should be assumed to be present. The data changes and configuration changes include but are not limited to installing, updating, replacing, deleting digital certificates, cryptographic keys, applets, other digital credentials, attributes of installed objects, or other stored proprietary information.

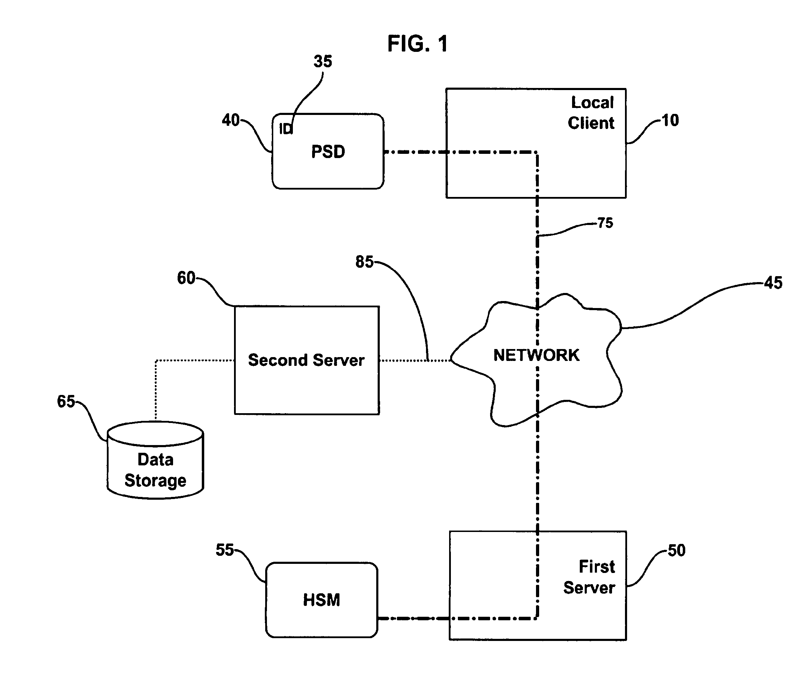

Referring to FIG. 1, a generalized system block diagram of the invention is depicted. In Figure 1, a local client 10 is functionally connected to a PSD 40. The PSD 40 includes a unique identifier ID 35, which is used to determine the proper cryptographic key to access a secure domain contained within the PSD and the configuration or data change to be manipulated in the PSD. The PSD 40 is in remote communications with an HSM 55 associated with a first server 50. This remote communications pathway provides the highest degree of end-to-end security by limiting transactions to the secure domains of the HSM 55 and PSD 40.

The first server 50 and local client 10 having been previously and mutually authenticated using a pre-established authentication protocol. Typically, a challenge/response authentication protocol is employed. The PSD 40 unique identifier ID 35 is returned to the first server 50 during initial authentication. Communications between the HSM 55 and PSD 10 is accomplished through a communications pipe 75, which routes APDU messages containing encrypted command strings over a network 45 using the local client 10 and first server 50 as communications interfaces.

A previously authenticated second server 60 and associated data storage 65 is connected to the network 45 and in communications 85 with the first server 50. The data storage 65 contains the configuration or data change(s) which are retrievable using the PSD's unique identifier ID 35. This arrangement allows configurations or data changes to originate on any other computer system in networking communications with the first server 50. The network may be either a public or private network. In the preferred embodiment of the invention, all networking communications utilize a secure messaging protocol such as TLS, IPSEC or SSL. Other secure messaging protocols may be employed as well.

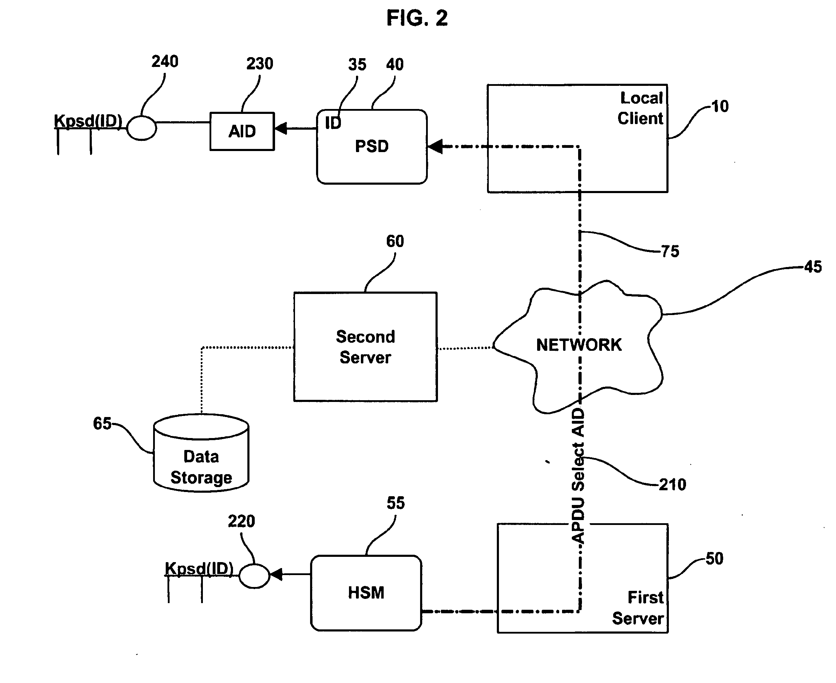

In FIG. 2, to access the secure domain containing the configuration or data to be manipulated, an APDU select command 210 is issued through the communications pipe 75, which selects the proper application identifier AID 230. Once the proper AID 230 has been selected, a cryptographic key Kpsd(ID) 220 is either generated or retrieved by the HSM 55 to encrypt APDU command strings necessary to accomplish the configuration or data change. The proper AID 230 and cryptographic key Kpsd(ID) 220 are determined by using the PSD's unique identifier ID 35 as an index. The key Kpsd(ID) 220 may be either a shared symmetric key or an asymmetric key either of which are complementary to an internal key Kpsd(ID) 240 already present in the PSD 10.

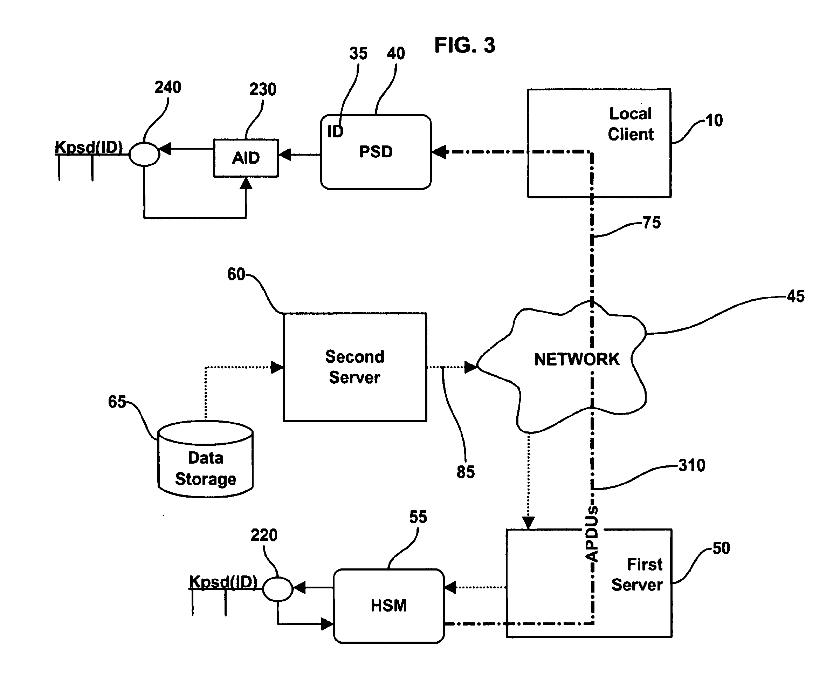

Referring to FIG. 3, configuration or data changes are retrieved from the data storage 65 associated with the second server 60 and securely sent 85 over the network 45 utilizing a secure messaging protocol (e.g. TLS, IPSEC or SSL) where the configuration or data changes are received by the first server 50 and routed into the HSM 55. The HSM 55 encrypts the configuration or data changes using the complementary cryptographic key Kpsd(ID) 220. The encrypted commands and data strings are encapsulated into APDUs 310 and routed through the communications pipe 75 and into the PSD 40 for processing by the application associated with the proper AID 230. It is also envisioned that other authenticated sources of configuration or data changes may be received over the network 45 or supplied directly from the first server 50.

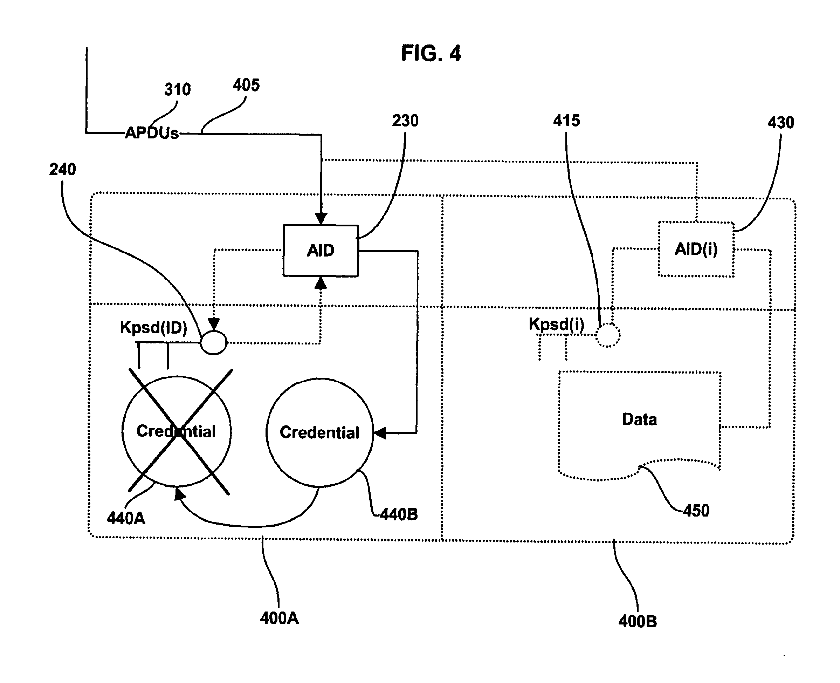

In FIG. 4, incoming APDUs 310 containing the encrypted data strings are routed 405 to the application selected by the application identifier AID 230, sequentially decrypted using the existing cryptographic key Kpsd(ID) 240 and processed by the application selected by the AID 230. An example configuration or data manipulation is shown where an existing credential 440A is replaced with a new credential 440B by the application selected by the AID 230. The first incoming command is decrypted using the cryptographic key Kpsd(ID) 240 which instructs the application selected by the AID 230 to delete the existing credential 440A. A second incoming command and encapsulated credential 440B is decrypted as before and instructs the application selected by the AID 230 to install the new credential 440B. This sequence continues until the last incoming APDU command has been processed.

Other secure domains 400B within the target PSD, including their associated applications identified by AID(i) 430, cryptographic keys Kpsd(i) 415, and data 450 are not affected by the transactions occurring within the secure domain 400A.

The foregoing described embodiments of the invention are provided as illustrations and descriptions. They are not intended to limit the invention to precise form described. In particular, it is contemplated that functional implementation of the invention described herein may be implemented equivalently in hardware, software, firmware, and/or other available functional components or building blocks.

Other variations and embodiments are possible in light of above teachings, and it is not intended that this Detailed Description limit the scope of invention, but rather by the Claims following herein.

## Claims

1. A post issuance system for performing data or configuration changes within a Personnal Security Device, PSD (40), said system comprising:
- said PSD (40), including at least one functional application and PSD cryptographic means (240),
- a local client (10) functionally connected to said PSD (40),
- a first server (50) functionally connected to said local client (10), said PSD (40) and said first server (50) comprising first means for mutual authentication,
- at least one Hardware Security Module, HSM (55), including HSM cryptographic means (220) complementary to said PSD cryptographic means (240), said at least one HSM (55) being functionally connected to said first server (50),
- means for establishing a communications pipe (75) between said PSD (40) and said at least one HSM (55),
- storing means (60) for storing or generating said data or configuration changes, said storing means (60) being functionally connected to said first server (50),
- said at least one HSM (55) comprising controlling means for controlling said data or configuration changes sent through said communications pipe (75) to said PSD (40).

2. The system according to claim 1 comprising a network (45) for the establishment of said communications pipe (75).

3. The system according to claim 1 or 2 wherein said at least one functional application includes means for processing Application Protocol Data "APDU" Unit commands and said data or configuration changes received through said communications pipe (75).

4. The system according to any claim 1 to 3 further including at least one second server (60) in processing communications with said first server (50), wherein said at least one second server (60) includes stored data or configuration changes retrievable using a PSD unique identifier (35).

5. The system according to claim 4 wherein said first server (50) and said at least one second server (60) comprise means for mutual authentication.

6. The system according to any claim 1 to 5 wherein said at least one functional application includes an application identifier (230).

7. The system according to claim 6 comprising selecting means for selecting said at least one functional application using said application identifier (230).

8. The system according to claim 4 comprising a network (45) for the establishment of said communications pipe (75) and for functionally connecting said at least one second server (60) to said first server (50), and sending means for sending said retrieved data or configuration changes from said at least one second server (60) over said network (45) to said first server (50).

9. The system according to claim 4, 5 or 8 wherein said first server (50) comprises first processing means for receiving and processing said data or configuration changes, and wherein said at least one HSM (55) comprises second processing means for further processing said data or configuration changes.

10. The system according to any claim 1 to 9 wherein said at least one HSM (55) comprises generating means for generating at least one command executable by said at least one functional application.

11. The system according to claim 10 wherein said at least one HSM (55) comprises encrypting means for encrypting said at least one command and said data or configuration changes, forming at least one cryptogram. ,

12. The system according to claim 11 comprising sending means for sending said at least one cryptogram through said communications pipe (75) into said PSD (40) for processing by said at least one functional application.

13. The system according to claim 12 wherein said at least one functional application comprises decrypting means for decrypting said cryptogram using said PSD cryptographic means (240), and executing means for executing said at least one command.

14. The system according to claim 2 wherein said network (45) is a public network (45).

15. The system according to claim 2 wherein said network (45) is a private network (45).

16. The system according to any claim 1 to 15 wherein said communications pipe (75) is provided with a secure communications protocol.

17. The system according to any claim 1 to 16 wherein said HSM cryptographic means (220) and said PSD cryptographic means (240) comprise complementary asymmetric keys.

18. The system according to any claim 1 to 16 wherein said HSM cryptographic means (220) and said PSD cryptographic means (240) comprise complementary symmetric keys.

19. A post issuance method for performing data or configuration changes within a Personal Security Device, PSD (40), said method comprising:
- establishing a communications pipe (75) between said PSD (40) and at least one, Hardware Security Module, HSM (55), wherein said PSD (40) is functionally connected to a local client (10) and said at least one HSM (55) is functionally connected to a first server (50),
- mutually authenticating said PSD (40) and said first server (50),
- selecting (210) at least one functional application within said PSD (40) associated with said existing data or configurations,
- retrieving said data or configuration changes,
- processing said data or configuration changes by said first server (50),
- encrypting said processed data or configuration changes by said at least one HSM (55) using generated or retrieved HSM cryptographic means (220) which are complementary to cryptographic means (240) included inside said PSD (40),
- routing (310) said encrypted processed data or configuration changes through said communications pipe (75) into said PSD (40), and
- decrypting and processing said processed data or configuration changes by said at least one functional application using said PSD cryptographic means (240).

20. The method according to claim 19, comprising the step of retrieving said data or configuration changes from at least one second server (60), and of sending said data and configuration changes over a network (45) from said second server (60) to said first server (50).

21. The method according to claim 20 further including the step of mutually authenticating said at least one second server (60) and said first server (50).

22. The method according to claim 21, comprising the further step of using a unique identifier (35) associated with said PSD (40) for mutually authenticating said PSD (40) and said first server (50).

23. The method according to any claim 19 to 22, comprising the further step of using a unique identifier (35) associated with said PSD (40) for selecting said at least one functional application.

24. The method according to any claim 19 to 23, comprising the further step of using a unique identifier (35) associated with said PSD (40) for generating or retrieving said HSM cryptographic means (220).

25. The method according to any claim 19 to 24, comprising the further step of using a unique identifier (35) associated with said PSD (40) for retrieving said data or configuration changes.

26. The method according to any claim 19 to 25, wherein at least one command executable by said at least one functional application is issued by said at least one HSM (55), routed through said communications pipe (75) into said PSD (40), and processed by said at least one functional application.

27. The method according to any claim 19 to 26, comprising the step of functionally connecting said local client (10) and said first server (50) through a private network (45).

28. The method according to any claim 19 to 26, comprising the step of functionally connecting said local client (10) and said first server (50) through a public network (45).

29. The method according to any claim 19 to 28, comprising the step of employing asymmetric cryptographic means for said HSM cryptographic means (220) and said PSD cryptographic means (240).

30. The method according to any claim 19 to 28, comprising the step of employing symmetric cryptographic means for said HSM cryptographic means (220) and said PSD cryptographic means (240).

31. The method according to any claim 19 to 30, comprising the step of using a secure communications protocol for said communications pipe (75).

## Patentansprüche

1. Post-Ausgabe-System zur Durchführung von Daten- oder Konfigurationsänderungen in einer persönlichen Sicherheitsvorrichtung, PSD (40), wobei das System umfasst:
- die PSD (40) umfassend mindestens eine Funktionsanwendung und PSD-Kryptographie-Mittel (240),
- einen lokalen Client (10), der mit der PSD (40) funktionsfähig verbunden ist,
- einen ersten Server (50), der mit dem lokalen Client (10) funktionsfähig verbunden ist, wobei die PSD (40) und der erste Server (50) erste Mittel für eine gegenseitige Authentisierung umfassen,
- mindestens ein Hardware-Absicherungsmodul, Hardware Security Module - HSM (55), umfassend HSM-Kryptographie-Mittel (220), die zu den PSD-Kryptographie-Mitteln (240) komplementär sind, wobei wenigstens ein HSM (55) mit dem ersten Server (50) funktionsfähig verbunden ist,
- Mittel zum Aufbau einer Kommunikations-Pipeline (75) zwischen der PSD (40) und mindestens einem HSM (55),
- Speichermittel (60) zum Speichern oder Erzeugen der Daten- oder Konfigurationsänderungen, wobei die Speichermittel (60) mit dem ersten Server (50) funktionsfähig verbunden sind,
- wobei das mindestens eine HSM (55) Steuerungsmittel zum Steuern der Daten- oder Konfigurationsänderungen, die durch die Kommunikations-Pipeline (75) zur PSD (40) gesendet werden, umfasst.

2. System nach Anspruch 1, umfassend ein Netz (45) für den Aufbau der Kommunikations-Pipeline (75).

3. System nach Anspruch 1 oder 2, wobei mindestens eine Funktionsanwendung Mittel zum Verarbeiten von Befehlen von einer so genannten Application Protocol Data Unit "APDU" und der Daten- oder Konfigurationsänderungen, die durch die Kommunikations-Pipeline (75) empfangen werden, umfasst.

4. System nach einem der Ansprüche 1 bis 3, ferner umfassend mindestens einen zweiten Server (60) im Verarbeitungsdatenaustausch mit dem ersten Server (50), wobei der mindestens eine zweite Server (60) gespeicherte Daten- oder Konfigurationsänderungen enthält, die unter Verwendung einer eindeutigen PSD-Kennung (35) abrufbar sind.

5. System nach Anspruch 4, wobei der erste Server (50) und der mindestens eine zweite Server (60) Mittel zur gegenseitigen Authentisierung umfassen.

6. System nach einem der Ansprüche 1 bis 5, wobei die mindestens eine Funktionsamvendung eine Anwendungskennung (230) umfasst.

7. System nach Anspruch 6, umfassend Auswahlmittel zum Auswählen der mindestens einen Funktionsanwendung unter Verwendung der Anwendungskennung (230).

8. System nach Anspruch 4, umfassend ein Netz (45) für den Aufbau der Kommunikations-Pipeline (75) und für die funktionsfähige Verbindung des mindestens einen zweiten Servers (60) mit dem ersten Server (50) sowie Sendemittel zum Senden der abgerufenen Daten- oder Konfigurationsänderungen von dem mindestens einen zweiten Server (60) über das Netz (45) zu dem ersten Server (50).

9. System nach Anspruch 4, 5 oder 8, wobei der erste Server (50) erste Verarbeitungsmittel zum Empfangen und Verarbeiten der Daten- oder Konfigurationsänderungen umfasst, und wobei das mindestens eine HSM (55) zweite Verarbeitungsmittel zur Weiterverarbeitung der Daten- oder Konfigurationsänderungen umfasst.

10. System nach einem der Ansprüche 1 bis 9, wobei mindestens ein HSM (55) Erzeugungsmittel zum Erzeugen mindestens eines Befehls, der von der mindestens einen Funktionsanwendung ausführbar ist, umfasst.

11. System nach Anspruch 10, wobei das mindestens eine HSM (55) Verschlüsselungsmittel zum Verschlüsseln des mindestens einen Befehls und der Daten- oder Konfigurationsänderungen, die mindestens ein Kryptogramm bilden, umfasst.

12. System nach Anspruch 11, umfassend Sendemittel zum Senden des mindestens einen Kryptogramms durch die Kommunikations-Pipeline (75) in die PSD (40) zur Verarbeitung durch die mindestens eine Funktionsanwendung.

13. System nach Anspruch 12, wobei die mindestens eine Funktionsanwendung Entschlüsselungsmittel zum Entschlüsseln des Kryptogramms unter Verwendung der PSD-Kryptographie-Mittel (240) sowie Ausführungsmittel zum Ausführen des mindestens einen Befehls umfasst.

14. System nach Anspruch 2, wobei das Netz (45) ein öffentliches Netz (45) ist.

15. System nach Anspruch 2, wobei das Netz (45) ein privates Netz (45) ist.

16. System nach einem der Ansprüche 1 bis 15, wobei die Kommunikations-Pipeline (75) mit einem sicheren Kommunikationsprotokoll versehen ist.

17. System nach einem der Ansprüche 1 bis 16, wobei die HSM-Kryptographie-Mittel (220) und die PSD-Kryptographie-Mittel (240) komplementäre asymmetrische Schlüssel umfassen.

18. System nach einem der Ansprüche 1 bis 16, wobei die HSM-Kryptographie-Mittel (220) und die PSD-Kryptographie-Mittel (240) komplementäre symmetrische Schlüssel umfassen.

19. Post-Ausgabe-Verfahren zur Durchführung von Daten- oder Konfigurationsänderungen in einer persönlichen Sicherheitsvorrichtung PSD (40), wobei das Verfahren umfasst:
- Aufbauen einer Kommunikations-Pipeline (75) zwischen der PSD (40) und mindestens einem Hardware-Absicherungsmodul, HSM (55), wobei die PSD (40) mit einem lokalen Client (10) funktionsfähig verbunden ist und das mindestens eine HSM (55) mit einem ersten Server (50) funktionsfähig verbunden ist,
- gegenseitiges Authentisieren der PSD (40) und des ersten Servers (50),
- Auswählen (210) mindestens einer Funktionsanwendung in der PSD (40), die den vorhandenen Daten oder Konfigurationen zugeordnet ist,
- Abrufen der Daten- oder Konfigurationsänderungen,
- Verarbeiten der Daten- oder Konfigurationsänderungen durch den ersten Server (50),
- Verschlüsseln der verarbeiteten Daten- oder Konfigurationsänderungen durch das mindestens eine HSM (55) unter Verwendung erzeugter oder abgerufener HSM-Kryptographie-Mittel (220), die komplementär zu den Kryptographie-Mitteln (240) sind, die in der PSD (40) enthalten sind,
- Leiten (310) der verschlüsselten verarbeiteten Daten- oder Konfigurationsänderungen durch die Kommunikations-Pipeline (75) in die PSD (40), und
- Entschlüsseln und Verarbeiten der verarbeiteten Daten- oder Konfigurationsänderungen durch die mindestens eine Funktionsanwendung unter Verwendung der PSD-Kryptographie-Mittel (240).

20. Verfahren nach Anspruch 19, umfassend den Schritt des Abrufens der Daten- oder Konfigurationsänderungen von mindestens einem zweiten Server (60) und des Sendens der Daten- und Konfigurationsänderungen über ein Netz (45) von dem zweiten Server (60) zu dem ersten Server (50).

21. Verfahren nach Anspruch 20, ferner umfassend den Schritt des gegenseitigen Authentisierens des mindestens einen zweiten Servers (60) und des ersten Servers (50).

22. Verfahren nach Anspruch 21, umfassend den weiteren Schritt des Verwendens einer eindeutigen Kennung (35), die der PSD (40) zugeordnet ist, für das gegenseitige Authentisieren der PSD (40) und des ersten Servers (50).

23. Verfahren nach einem der Ansprüche 19 bis 22, umfassend den weiteren Schritt des Verwendens einer eindeutigen Kennung (35), die der PSD (40) zugeordnet ist, zum Auswählen der mindestens einen Funktionsanwendung.

24. Verfahren nach einem der Ansprüche 19 bis 23, umfassend den weiteren Schritt des Verwendens einer eindeutigen Kennung (35), die der PSD (40) zugeordnet ist, zum Erzeugen oder Abrufen der HSM-Kryptographie-Mittel (220).

25. Verfahren nach einem der Ansprüche 19 bis 24, umfassend den weiteren Schritt des Verwendens einer eindeutigen Kennung (35), die der PSD (40) zugeordnet ist, zum Abrufen der Daten- oder Konfigurationsänderungen.

26. Verfahren nach einem der Ansprüche 19 bis 25, wobei mindestens ein Befehl, der durch die mindestens eine Funktionsanwendung ausführbar ist, von dem mindestens einen HSM (55) ausgegeben, durch die Kommunikations-Pipeline (75) in die PSD (40) geleitet und durch die mindestens eine Funktionsanwendung verarbeitet wird.

27. Verfahren nach einem der Ansprüche 19 bis 26, umfassend den Schritt des funktionsfähigen Verbindens des lokalen Clients (10) mit dem ersten Server (50) über ein privates Netz (45).

28. Verfahren nach einem der Ansprüche 19 bis 26, umfassend den Schritt des funktionsfähigen Verbindens des lokalen Clients (10) mit dem ersten Server (50) über ein öffentliches Netz (45).

29. Verfahren nach einem der Ansprüche 19 bis 28, umfassend den Schritt des Benutzens asymmetrischer kryptographischer Mittel für die HSM-Kryptographie-Mittel (220) und die PSD-Kryptographie-Mittel (240).

30. Verfahren nach einem der Ansprüche 19 bis 28, umfassend den Schritt des Benutzens symmetrischer kryptographischer Mittel für die HSM-Kryptographie-Mittel (220) und die PSD-Kryptographie-Mittel (240).

31. Verfahren nach einem der Ansprüche 19 bis 30, umfassend den Schritt des Verwendens eines sicheren Kommunikationsprotokolls für die Kommunikations-Pipeline (75).

## Revendications

1. Système après la délivrance destiné à exécuter des modifications de données ou de configurations à l'intérieur d'un dispositif de sécurité personnel PSD (40), ledit système comprenant :
- ledit dispositif PSD (40) comprenant au moins une application fonctionnelle et un moyen cryptographique de dispositif PSD (240),
- un client local (10) relié fonctionnellement audit dispositif PSD (40),
- un premier serveur (50) relié fonctionnellement audit client local (10), ledit dispositif PSD (40) et ledit premier serveur (50) comprend un premier moyen pour une authentification mutuelle,
- au moins un module de sécurité de matériel HSM (55), comprenant un moyen cryptographique de module HSM (220) complémentaire dudit moyen cryptographique de dispositif PSD (240), ledit au moins un module HSM (55) étant relié fonctionnellement audit premier serveur (50),
- un moyen destiné à établir un tuyau de communications (75) entre ledit dispositif PSD (40) et ledit au moins un module HSM (55),
- un moyen de mémorisation (60) destiné à mémoriser ou générer lesdites modifications de données ou de configurations, ledit moyen de mémorisation (60) étant fonctionnellement relié audit premier serveur (50),
- ledit au moins un module HSM (55) comprenant un moyen de commande destiné à commander lesdites modifications de données ou de configurations envoyées au travers dudit tuyau de communications (75) audit dispositif PSD (40).

2. Système selon la revendication 1, comprenant un réseau (45) pour l'établissement dudit tuyau de communications (75).

3. Système selon la revendication 1 ou 2, dans lequel ladite au moins une application fonctionnelle comprend un moyen de traitement d'instructions d'unité de données de protocole d'application "APDU" et lesdites modifications de données ou de configurations reçues par l'intermédiaire dudit tuyau de communications (75).

4. Système selon l'une quelconque des revendications 1 à 3 comprenant en outre au moins un second serveur (60) de traitement des communications avec ledit premier serveur (50), où ledit au moins un second serveur (60) comprend des modifications de données ou de configurations mémorisées récupérables en utilisant un identificateur unique de dispositif PSD (35).

5. Système selon la revendication 4, dans lequel ledit premier serveur (50) et ledit au moins un second serveur (60) comprend un moyen d'authentification mutuelle.

6. Système selon l'une quelconque des revendications 1 à 5, dans lequel ladite au moins une application fonctionnelle comprend un identificateur d'application (230).

7. Système selon la revendication 6, comprenant un moyen de sélection destiné à sélectionner ladite au moins une application fonctionnelle en utilisant ledit identificateur d'application (230).

8. Système selon la revendication 4, comprenant un réseau (45) pour l'établissement dudit tuyau de communications (75) et pour relier fonctionnellement ledit au moins un second serveur (60) audit premier serveur (50), et un moyen d'expédition destiné à expédier lesdites modifications de données ou de configurations récupérées depuis ledit au moins un second serveur (60) sur ledit réseau (45) audit premier serveur (50).

9. Système selon la revendication 4, 5 ou 8, dans lequel ledit premier serveur (50) comprend un premier moyen de traitement destiné à recevoir et traiter lesdites modifications de données ou de configurations, et dans lequel ledit au moins un module HSM (55) comprend un second moyen de traitement destiné à effectuer un autre traitement desdites modifications de données ou de configurations.

10. Système selon l'une quelconque des revendications 1 à 9, dans lequel ledit au moins un module HSM (55) comprend un moyen de génération destiné à générer au moins une instruction exécutable par ladite au moins une application fonctionnelle.

11. Système selon la revendication 10, dans lequel ledit au moins un module HSM (55) comprend un moyen de cryptage destiné à crypter ladite au moins une instruction et lesdites modifications de données ou de configurations, en formant au moins un cryptogramme.

12. Système selon la revendication 11, comprenant un moyen d'expédition destiné à expédier ledit au moins un cryptogramme par l'intermédiaire dudit tuyau de communications (75) dans ledit dispositif PSD (40) en vue d'un traitement par ladite au moins une application fonctionnelle.

13. Système selon la revendication 12, dans lequel ladite au moins une application fonctionnelle comprend un moyen de décryptage destiné à décrypter ledit cryptogramme en utilisant ledit moyen cryptographique de dispositif PSD (240), et un moyen d'exécution destiné à exécuter ladite au moins une instruction.

14. Système selon la revendication 2, dans lequel ledit réseau (45) est un réseau publique (45).

15. Système selon la revendication 2, dans lequel ledit réseau (45) est un réseau privé (45).

16. Système selon l'une quelconque des revendications 1 à 15, dans lequel ledit tuyau de communications (75) est doté d'un protocole de communications sécurisées.

17. Système selon l'une quelconque des revendications 1 à 16, dans lequel ledit moyen cryptographique de module HSM (220) et ledit moyen cryptographique de dispositif PSD (240) comprennent des clés asymétriques complémentaires.

18. Système selon l'une quelconque des revendications 1 à 16, dans lequel ledit moyen cryptographique de module HSM (220) et ledit moyen cryptographique de dispositif PSD (240) comprennent des clés symétriques complémentaires.

19. Procédé après la délivrance destiné à exécuter des modifications de données ou de configurations à l'intérieur d'un dispositif de sécurité personnel PSD (40), ledit procédé comprenant les étapes consistant à :
- établir un tuyau de communications (75) entre ledit dispositif PSD (40) et au moins un module de sécurité de matériel, module HSM, (55), dans lequel ledit dispositif PSD (40) est fonctionnellement relié à un client local (10) et ledit au moins un module HSM (55) est fonctionnellement relié à un premier serveur (50),
- mutuellement authentifier ledit dispositif PSD (40) et ledit premier serveur (50),
- sélectionner (210) au moins une application fonctionnelle au sein dudit dispositif PSD (40) associé auxdites données ou configurations existantes,
- récupérer lesdites modifications de données ou de configurations,
- traiter lesdites modifications de données ou de configurations par le biais dudit premier serveur (50),
- crypter lesdites modifications de données ou de configurations traitées par ledit au moins un module HSM (55) en utilisant un moyen cryptographique de module HSM généré ou récupéré (220) qui est complémentaire du moyen cryptographique (240) compris à l'intérieur dudit dispositif PSD (40),
- acheminer (310) lesdites modifications de données ou de configurations traitées cryptées par l'intermédiaire dudit tuyau de communications (75) dans ledit dispositif PSD (40), et
- décrypter et traiter lesdites modifications de données ou de configurations traitées par ladite au moins une application fonctionnelle en utilisant ledit moyen cryptographique de dispositif PSD (240).

20. Procédé selon la revendication 19, comprenant l'étape consistant à récupérer lesdites modifications de données ou de configurations à partir d'au moins un second serveur (60) et à expédier lesdites modifications de données et de configurations sur un réseau (45) dudit second serveur (60) audit premier serveur (50).

21. Procédé selon la revendication 20, comprenant en outre l'étape consistant à authentifier mutuellement ledit au moins un second serveur (60) et ledit premier serveur (50).

22. Procédé selon la revendication 21, comprenant l'étape supplémentaire consistant à utiliser un identificateur unique (35) associé audit dispositif PSD (40) pour authentifier mutuellement ledit dispositif PSD (40) et ledit premier serveur (50).

23. Procédé selon l'une quelconque des revendications 19 à 22, comprenant l'étape supplémentaire consistant à utiliser un identificateur unique (35) associé audit dispositif PSD (40) pour sélectionner ladite au moins une application fonctionnelle.

24. Procédé selon l'une quelconque des revendications 19 à 23, comprenant l'étape supplémentaire consistant à utiliser un identificateur unique (35) associé audit dispositif PSD (40) pour générer ou récupérer ledit moyen cryptographique de module HSM (220).

25. Procédé selon l'une quelconque des revendications 19 à 24, comprenant l'étape supplémentaire consistant à utiliser un identificateur unique (35) associé audit dispositif PSD (40) pour récupérer lesdites modifications de données ou de configurations.

26. Procédé selon l'une quelconque des revendications 19 à 25, dans lequel au moins une instruction exécutable par ladite au moins une application fonctionnelle est émise par ledit au moins un module HSM (55), acheminée par l'intermédiaire dudit tuyau de communications (75) jusque dans ledit dispositif PSD (40), et traitée par ladite au moins une application fonctionnelle.

27. Procédé selon l'une quelconque des revendications 19 à 26, comprenant l'étape consistant à relier fonctionnellement ledit client local (10) et ledit premier serveur (50) par l'intermédiaire d'un réseau privé (45).

28. Procédé selon l'une quelconque des revendications 19 à 26, comprenant l'étape consistant à relier fonctionnellement ledit client local (10) et ledit premier serveur (50) par l'intermédiaire d'un réseau public (45).

29. Procédé selon l'une quelconque des revendications 19 à 28, comprenant l'étape consistant à employer un moyen cryptographique asymétrique pour ledit moyen cryptographique de module HSM (220) et ledit moyen cryptographique de dispositif PSD (240).

30. Procédé selon l'une quelconque des revendications 19 à 28, comprenant l'étape consistant à employer un moyen cryptographique symétrique pour ledit moyen cryptographique de module HSM (220) et ledit moyen cryptographique de dispositif PSD (240).

31. Procédé selon l'une quelconque des revendications 19 à 30, comprenant l'étape consistant à utiliser un protocole de communications sécurisées pour ledit tuyau de communications (75).
